# EUROPEAN PATENT APPLICATION

(11) **EP 3 249 820 A1**
(43) Date of publication of application: **29.11.2017**
(21) Application number: 15899655.3
(22) Date of filing: 29.07.2015
(51) Int. Cl.: H04B 1/04, H04B 1/40

(54) **ANTENNA DEVICE, CONTROL DEVICE, AND WIRELESS COMMUNICATION DEVICE**

(71) Applicant: Kabushiki Kaisha Toshiba, Minato-ku, Tokyo 105-8001 (JP)
(72) Inventor: KISHIMOTO, Seiya, (JP); HIGAKI, Makoto, (JP)
(74) Representative: Moreland, David
(86) International application number: PCT/JP2015/071550
(87) International publication number: WO 2017/017822

(57) **Abstract**

An antenna device according to an embodiment includes an antenna including a power feeding point, a matching circuit having a variable impedance, a loop type probe being installed near the power feeding point and receiving a radio wave radiated from the antenna, a power detector detecting electric power of the radio wave received by the loop type probe, and a control circuit controlling an impedance of the matching circuit on the basis of power information output from the power detector.

## Description

### Technical Field

Embodiments described herein relate generally to an antenna device, a control device, and a radio communication device.

### Background Art

In radio communication devices such as mobile phones, power loss may occur due to a mismatch between an input impedance of an antenna and an output impedance of a radio. In order to suppress the power loss, there is a method of installing a matching circuit with variable impedance between an antenna and a radio, detecting an impedance mismatch through a probe, and matching the input impedance of the antenna with the output impedance of the radio automatically. In the above method, downsizing of an antenna device including the matching circuit and the probe is desired.

### Citation List

### Patent Document

Patent Document 1: JP5679921B2

### Summary of Invention

### Problems to be Solved by the Invention

An object of the present invention is to provide an antenna device, a control device and a radio communication device, which are capable of performing automatic impedance matching and realizing downsizing.

### Means for Solving the Problem

An antenna device according to an embodiment includesan antenna including a power feeding point; a matching circuit having variable impedance; a loop type probe being installed near the power feeding point, the loop type probe receiving a radio wave radiated from the antenna; a power detector detecting electric power of the radio wave received by the loop type probe; and a control circuit controlling an impedance of the matching circuit on the basis of power information output from the power detector.

### Brief Description of Drawings

Fig. 1 is a schematic diagram illustrating a configuration of an antenna device and a radio communication device according to a first embodiment; and
Fig. 2 is a schematic diagram illustrating a configuration of an antenna device and a radio communication device according to a second embodiment.

### DETAILED DESCRIPTION

Hereinafter, exemplary embodiments will be described with reference to the appended drawings. In the drawings, the same or similar parts are denoted by the same or similar reference numerals.

Further, in an embodiment, connection between a circuit (an A circuit) and a circuit (a B circuit) means that a signal is transmitted from the A circuit having a specific function to the B circuit having another function. It does not necessarily mean that the A circuit is physically connected with the B circuit.

### (First embodiment)

An antenna device according to an embodiment includes an antenna including a power feeding point, a matching circuit having a variable impedance, a loop type probe being installed near the power feeding point and receiving a radio wave radiated from the antenna, a power detector detecting electric power of the radio wave received by the probe, and a control circuit controlling the impedance of the matching circuit on the basis of power information output from the power detector.

A radio communication device of the present embodiment further includes a radio configured to generate a signal and an amplifier configured to amplify the signal and output the amplified signal to the antenna device in addition to the antenna device,

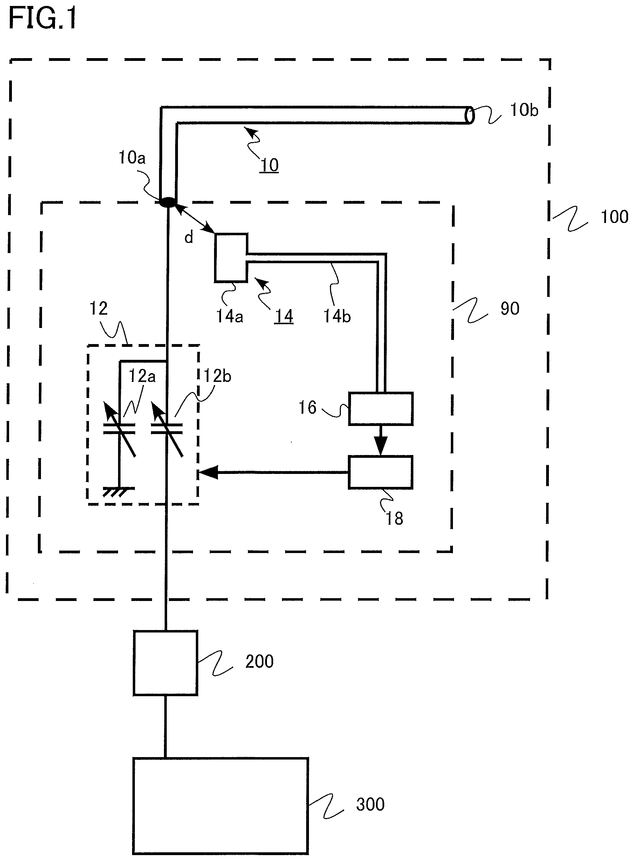

Fig. 1 is a schematic diagram illustrating a configuration of an antenna device and a radio communication device according to the present embodiment. The radio communication device of the present embodiment includes an antenna device 100, a power amplifier 200, and a radio 300. The radio 300 is, for example, a transceiver. The antenna device 100, the power amplifier 200 connected to the antenna device 100, and the radio 300 constitute the radio communication device. Examples of the radio communication device include a mobile phone and a wireless LAN device.

The antenna device 100 includes an antenna 10, a matching circuit 12, a probe 14, a power detector 16, and a control circuit 18. A portion of the antenna device 100 from which the antenna 10 is excluded is referred to as a control device 90.

The antenna 10 is a conductor. The antenna 10 transmits a signal to be transmitted from the radio 300 to the outside of the radio communication device.

The antenna 10 is, for example, an inverted L antenna having a power feeding point 10a and an end portion 10b on a side opposite to the power feeding point 10a. The end portion 10b is open end. It is desirable to use the inverted L antenna since it is possible to downsize the radio communication device including the antenna device 100, and it is easy to design the antenna device 100. However, the antenna 10 is not limited to the inverted L antenna. The antenna 10 may be any other kind of antennas such as an inverted F antenna, a comb antenna, a dipole antenna, a loop antenna, or the like.

The matching circuit 12 is installed between the antenna 10 and the power amplifier 200. The matching circuit 12 is connected to the power feeding point 10a of the antenna 10. The matching circuit 12 includes an access portion to which the antenna 10 is connectable. In the matching circuit 12 of the present embodiment, a connecting portion coincides with a position of the power feeding point 10a in Fig. 1.

The matching circuit 12 has a variable impedance. The radio communication device matches the input impedance of the antenna 10 with the output impedance of the radio 300 by adjusting the impedance of the matching circuit 12.

The matching circuit 12 is configured with, for example, two variable capacitors 12a and 12b. The two variable capacitors 12a and 12b are impedance variable element. There is no particular limitation to a use quantity of variable capacitors or a connection topology of a circuit. Besides the variable capacitor, a variable inductor or switch can also be used as an impedance variable element. A means for implementing a function of variable impedance is not limited to a semiconductor or a micro electro mechanical system (MEMS). Further, an inductor or a capacitor with a fixed characteristic value may be used for the sake of convenience of designing a variable impedance range.

The probe 14 is installed near the power feeding point 10a of the antenna 10. The probe 14 receives a radio wave radiated from the antenna 10.

The probe 14 is a loop type probe. The probe 14 includes a loop portion 14a formed at a leading end and a connection line 14b. The loop portion 14a has a loop-like shape. The loop-like shape may be a rectangular shape, a circular shape, or any other shape as long as it is a loop form.

"Near the power feeding point 10a of the antenna 10" indicates a position at which the probe 14 is able to detect a change in a radio wave caused by a change in an electric current of the power feeding point 10a. In other words, it indicates a position at which the probe 14 is able to detect a change in an electromagnetic field associated with a change in an electric current of power feeding point 10a.

For example, at least a portion of the loop portion 14a is arranged in a sphere whose radius centering on the power feeding point 10a is 1/4 of a wavelength corresponding to a maximum radio frequency used in the antenna device 100.

In the control device 90, the probe 14 is installed near the connecting portion.

The power detector 16 is connected to the probe 14. The power detector 16 detects electric power of the radio wave received by the probe 14. The power detector 16 has a function of outputting a DC voltage, a DC current, or binary data which corresponds to the intensity of the electric power of the radio wave received by the probe 14 as power information.

The control circuit 18 is installed between the power detector 16 and the matching circuit 12 to connect the power detector 16 with the matching circuit 12. The control circuit 18 controls the impedance of the matching circuit 12 based on the power information output from the power detector 16. The control circuit 18 controls the impedance of the matching circuit 12 so that the input impedance of the antenna 10 matches the output impedance of the radio 300.

For example, the control circuit 18 is implemented by a combination of hardware such as a microcomputer and software stored in a semiconductor memory. Further, for example, the control circuit 18 may be constituted by hardware such as an analog circuit, a digital circuit, or the like.

The radio 300 is connected to a side of the matching circuit 12 opposite to the antenna 10. The radio 300 is, for example, a transmitter. The radio 300 generates a signal to be transmitted to the antenna device 100.

The power amplifier 200 is connected between the matching circuit 12 and the radio 300. The power amplifier 200 amplifies a signal generated by the radio 300 and outputs the amplified signal to the antenna device 100. The power amplifier 200 is, for example, a variable gain amplifier.

Next, functions and effects of the antenna device 100 and the radio communication device of the present embodiment will be described.

First, the impedance matching performed by the antenna device 100 and the radio communication device of the present embodiment will be described.

The probe 14 receives the radio wave radiated from a portion near the power feeding point 10a of the antenna 10. An electromagnetic field (radio wave) near the power feeding point 10a is changed in accordance with a change in an electric current flowing to the power feeding point 10a of the antenna 10. The power detector 16 detects the electric power of the radio wave received by the probe 14. Then, the power detector 16 outputs a DC voltage, a DC current, or binary data which corresponds to the intensity of the detected electric power to the control circuit 18 as the power information.

The better the matching state between the input impedance of the antenna 10 and the output impedance of the radio 300 is, the greater the electric power supplied to the antenna 10 is. Further, when the electric power supplied from the power feeding point 10a of the antenna 10 increases, the electric current flowing to the power feeding point 10a of the antenna 10 increases.

As a result, the electric power of the radio wave received by the probe 14 arranged near the power feeding point 10a increases as well. Therefore, if control is performed such that the electric power detected by the power detector 16 is increased, the matching state of the antenna 10 is improved. Therefore, when the electric power of the radio wave radiated from the power feeding point 10a of the antenna 10 is maximum, the impedance can be regarded as matching best. In other words, the impedance matching of the radio communication device is achieved. The implementation of the impedance matching suppresses the power loss of the radio communication device.

In the device of the present embodiment, the control circuit 18 implements automatic impedance matching by controlling the matching circuit 12 on the basis of the radio wave received by the probe 14. The control circuit 18 controls the matching circuit 12 so that the electric power detected by the power detector 16 becomes maximum.

Specifically, for example, the control circuit 18 outputs a control signal for changing the impedance of the matching circuit 12 to the matching circuit 12. An impedance value of the matching circuit 12 is changed, for example, by changing a reactance value of variable capacitance element 12a and 12b of the matching circuit 12 in response to the control signal.

For example, the impedance value of the matching circuit 12 may be randomly changed, and a control signal in which the electric power detected by the power detector 18 becomes maximum may be stored. Further, for example, all combinations of all states given to the variable capacitance elements 12a and 12b may be set, a control signal in which the electric power detected by the power detector 16 becomes maximum may be stored. Any control method such as the above-described simple method or a known method may be used as the control method in the control circuit 18 as long as it can maximize the electric power detected by the power detector 16.

Next, effects of the antenna device 100 and the radio communication device of the present embodiment will be described.

The probe 14 is installed near the power feeding point 10a of the antenna 10. In the state where the electric power is supplied to the antenna 10, the amplitude of the electric current flowing through the antenna 10 becomes maximum in the power feeding point 10a. Therefore, when the probe 14 is installed near the power feeding point 10a of the antenna 10, it is possible to detect a change in the electric current associated with a state change of the impedance matching with good sensitivity.

For example, as another method of performing the impedance matching of the radio communication device, there is a method of installing a probe at an end portion serving as an open end of an antenna, unlike the present embodiment. When the electric power supplied from the power feeding point of the antenna increases, the electric current of the antenna increases. For this reason, an amount of charges increases in the end portion serving as the open end on the opposite side of the power feeding point of the antenna. As a result, the electric power of the radio wave received by the probe also increases by capacitive coupling with the probe arranged near the end portion serving as the open end.

Therefore, in the above method, if control is performed such that the electric power detected by the power detector is increased, the matching state of the antenna is improved. In other words, the impedance matching is achieved.

However, in the case of the above-described method, since the probe is installed at the end portion of the antenna, a distance (a line length) of the probe - the power detector - the control circuit - the matching circuit - the antenna is likely to increase. Therefore, the size of the antenna device and the radio communication device is likely to increase.

In the case of the above method, the antenna need to include the open end, and a type of antenna to be used is limited. Therefore, the degree of freedom of design of the antenna device and the radio communication device may be impaired.

According to the antenna device and the radio communication device of the present embodiment, the probe 14 is installed near the power feeding point 10a of the antenna 10, unlike the above-described method. With this structure, the distance (line length) of the probe 10 - the power detector 16 - the control circuit 18 - the matching circuit 12 - the antenna 10 is reduced. Therefore, the downsizing of the antenna device and the radio communication device is implemented.

In the antenna device and the radio communication device of the present embodiment, the impedance matching state is determined in accordance with the change in the electric current of the power feeding point 10a. Therefore, there is no limitation on a type of antenna 10, and for example, the loop-like antenna having no open end can be applied to the device.

It is desirable that a separation distance ("d" in Fig. 1) from the power feeding point 10a to the probe 14 be less than 1/4 of the wavelength corresponding to the maximum radio frequency used in the antenna device 100. The separation distance from the power feeding point 10a to the probe 14 is the shortest distance between the power feeding point 10a and the loop portion 14a. In other words, it is desirable that at least a portion of the loop portion 14a be arranged in a sphere whose radius centering on the power feeding point 10a is less than 1/4 of a wavelength corresponding to a maximum radio frequency used in the antenna device 100.

The power feeding point 10a of the antenna 10 is a position of an antinode of an electric current when the antenna 10 is in the resonant state. In a state in which the electric power is being supplied to the antenna 10, the amplitude of the electric current becomes maximum at the power feeding point 10a.

On the other hand, a position which is 1/4 of a wavelength of a maximum radio frequency to be used from the power feeding point 10a of the antenna to the end portion 10b side of the antenna is a first position of node of current when the antenna 10 is in the resonant state at the maximum radio frequency to be used. The node of current has a minimum current value when the antenna 10 is in the resonant state. The amplitude of the electric current is zero at this position, and this position is not suitable as a position for detecting the electric current flowing to the antenna 10.

A position which is less than 1/4 of the wavelength corresponding to the maximum radio frequency to be used from the power feeding point 10a of the antenna 10 along the antenna 10 is a position which is less than 1/4 of a wavelength from the power feeding point 10a for all use radio frequencies of the antenna device 100. In other words, this position is a position at which node of current does not exist for all the use radio frequencies of the antenna device 100.

When the probe 14 is arranged at a position which is less than 1/4 of the wavelength corresponding to the maximum radio frequency to be used from the power feeding point 10a of the antenna, the probe 14 is arranged at the position which is 1/4 of the wavelength for all the use radio frequencies of the antenna device 100. In other words, when the probe 14 is arranged at a position at which the amplitude of the electric current is obtained regardless of the radio frequency to be used, detection sensitivity for the impedance matching state is improved. Therefore, it is desirable to install the probe 14 at a position closer to the power feeding point 10a than the position which is 1/4 of the wavelength of the maximum radio frequency.

It is more desirable that the separation distance ("d" in Fig. 1) from the power feeding point 10a to the probe 14 is equal to or less than 1/8 of the wavelength corresponding to the maximum radio frequency used in the antenna device 100.

The position which is 1/8 of the wavelength corresponding to the maximum radio frequency to be used from the power feeding point 10a of the antenna is the midpoint between the power feeding point 10a and the position which is 1/4 of the wavelength corresponding to the maximum radio frequency. A region between the power feeding point 10a and the midpoint shows a large current change in association with a large current change of the power feeding point 10a. Therefore, when the probe 14 is arranged at the position which is equal to or less than 1/8 of the wavelength corresponding to the maximum radio frequency to be used from the power feeding point 10a of the antenna, it is easy to improve the impedance matching state of the antenna device 100.

Further, as the distance between the antenna 10 and the probe 14 increases, the amount of the radio wave received by the probe 14 decreases. If a spatial separation distance ("d" in Fig. 1) from the power feeding point 10a of the antenna 10 to the probe 14 is less than 1/4 of the wavelength of the radio frequency to be used, the decrease in the amount of the radio wave falls within a sufficient allowable range for matching the impedance. Therefore, when the probe 14 is arranged at a position which is less than 1/4 of the wavelength corresponding to the maximum radio frequency to be used, it is possible to detect the magnitude of the electric power supplied to the antenna 10 with satisfactory sensitivity for all the use radio frequencies and the impedance matching of the antenna 10 can be realized.

In order to detect the magnitude of the electric power supplied to the antenna 10 with satisfactory sensitivity, it is desirable that the spatial separation distance ("d" in Fig. 1) from the power feeding point 10a of the antenna 10 to the probe 14 be a position which is equal to or less than 1/8 of the wavelength of the maximum radio frequency used in the antenna device 100.

Further, the maximum radio frequency used in the antenna device 100 or the radio communication device can be specified from, for example, a specification or a data sheet of the antenna device 100 or the radio communication device. Further, the separation distance from the power feeding point 10a to the probe 14 can be specified by, for example, direct measurement according to a ruler or measurement according to a photograph scale on a photographic image which is enlarged and captured.

Further, in the antenna element and the radio communication device of the present embodiment, the loop type probe 14 is used. The loop type probe 14 is suitable for the purpose of detecting a change in the magnetic field. The power feeding point 10a become an antinode of an electric current or has maximum amplitude of an electric current when the antenna 10 is in the resonant state. Therefore, the change in the magnetic field near the power feeding point 10a is larger than the change in the electric field. In the device of the present embodiment, it is possible to detect the current change of the power feeding point 10a with high sensitivity using the loop type probe 14.

It is desirable that the element length of the probe 14 be less than 1/2 of the wavelength corresponding to the maximum radio frequency used in the antenna device 100. In other words, it is desirable that the resonance frequency of the probe 14 be higher than the maximum radio frequency used in the antenna device 100. The element length of the probe 14 is a physical length along the loop of the probe portion 14a.

As the probe 14 resonates, reception of the radio wave radiated from the antenna 10 by the probe 14 is likely to be unstable. Further, the resonant state of the antenna 10 is likely to be unstable due to the resonance of the probe 14. With the above configuration, the resonance of the probe 14 is prevented, and the antenna device and the radio communication device that operate stably are realized.

In order to reliably prevent the resonance of the probe 14, it is more desirable that the element length of the probe 14 is equal to or less than 1/4 of the wavelength corresponding to the maximum radio frequency used in the antenna device 100.

On the other hand, when the element length of probe 14 is too short, the receiving sensitivity of the radio wave detected by probe 14 may be insufficient. In order to secure the receiving sensitivity of the probe 14, it is desirable that the element length of probe 14 be equal to or more than 1/25 of the wavelength corresponding to the maximum radio frequency used in the antenna device 100.

The element length of the probe 14 can be specified by, for example, direct measurement according to a ruler or measurement according to a photograph scale on a photographic image which is enlarged and captured.

It is also possible to apply a two-dimensional spiral shape or a three-dimensional helical shape as the shape of the loop type probe 14. When the spiral shape or the helical shape is applied, it is possible to increase the element length by suppressing an increase in the size of the probe 14. Therefore, it is possible to improve the receiving sensitivity of the radio wave radiated from the antenna 10 while suppressing the increase in the size of the device.

According to the present embodiment, it is possible to provide an antenna device, a control device and a radio communication device, which are capable of performing automatic impedance matching and realizing downsizing.

### (Second embodiment)

The antenna device and the radio communication device of the present embodiment are similar to those of the first embodiment except that the antenna includes a plurality of end portions. Therefore, description overlapping with that of the first embodiment is omitted.

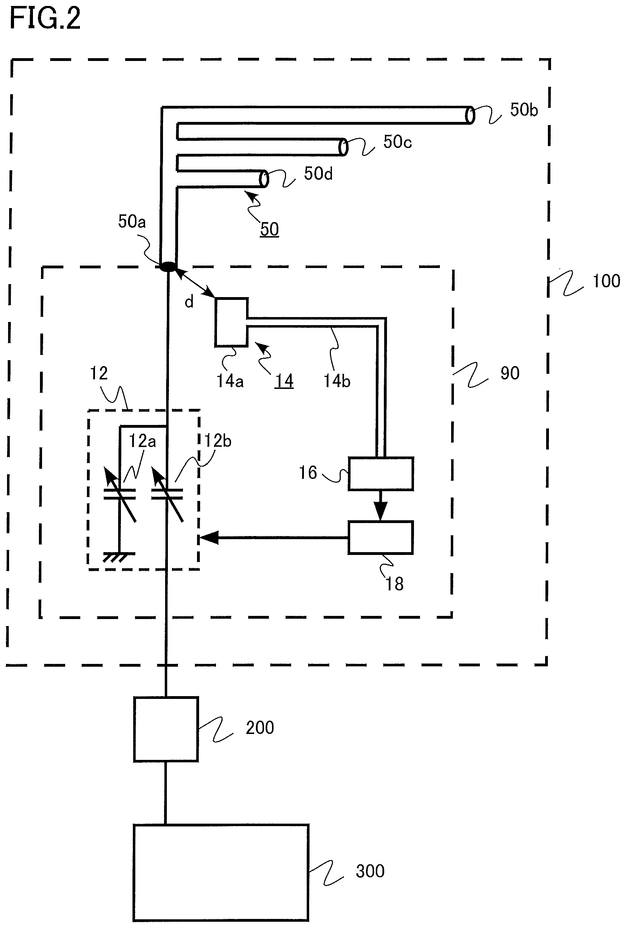

Fig. 2 is a schematic diagram illustrating a configuration of an antenna device and a radio communication device of the present embodiment.

An antenna 50 includes, for example, a power feeding point 50a and a plurality of end portions 50b, 50c, and 50d on a side opposite to the power feeding point 50a. The antenna 50 is a monopole antenna. The antenna 50 includes a plurality of resonance frequencies. Further, the antenna device and the radio communication device of the present embodiment have a function of operating at multiple frequencies and a wide band.

The probe 14 is installed near the power feeding point 50a of the antenna 50. For example, at least a portion of the loop portion 14a is arranged in a sphere whose radius centering on the power feeding point 50a is 1/4 of a wavelength corresponding to a maximum radio frequency used in the antenna device 100. The probe 14 receives the radio wave radiated from the antenna 50.

When the impedance of the radio communication device is matched, an electric current of the power feeding point 50a increases even when the antenna 50 uses any one of a plurality of corresponding resonance frequencies. Therefore, when the probe 14 is installed near the power feeding point 50a of the antenna 50, it is possible to detect the impedance matching state regardless of the used resonance frequency. Therefore, it is possible to provide the antenna device, the control device, and the radio communication device, which are capable of automatically matching the impedance and realizing downsizing even when the antenna 50 has a plurality of resonance frequencies and operates at multiple frequencies and a wide band as in the device of the present embodiment.

While several embodiments of the present invention have been described, these embodiments have been presented by way of example and are not intended to limit the scope of the invention. These novel embodiments can be implemented in various other forms, and various omissions, substitutions, and modifications can be made without departing from the spirit of the invention. For example, the constituent elements of one embodiment may be replaced or modified with constituent elements of another embodiment. These embodiments and modifications thereof are included in the scope and spirit of the invention and are included in the invention described in the appended claims and the equivalent scope thereof.

## Claims

1. An antenna device, comprising:
an antenna including a power feeding point;
a matching circuit having variable impedance;
a loop type probe being installed near the power feeding point, the loop type probe receiving a radio wave radiated from the antenna;
a power detector detecting electric power of the radio wave received by the loop type probe; and
a control circuit controlling an impedance of the matching circuit on the basis of power information output from the power detector.

2. The device according to claim 1,
wherein the loop type probe is arranged such that a separation distance from the power feeding point to the loop type probe is less than 1/4 of a wavelength corresponding to a maximum radio frequency used in the antenna device.

3. The device according to claim 1 or 2,
wherein an element length of the loop type probe is less than 1/2 of a wavelength corresponding to a maximum radio frequency used in the antenna device.

4. The device according to claim 1,
wherein a resonance frequency of the loop type probe is higher than a maximum radio frequency used in the antenna device.

5. The device according to any one of claims 1 to 4,
wherein a shape of the loop type probe is a spiral shape or a helical shape.

6. A control device, comprising:
a matching circuit including a connecting portion connectable to an antenna and having variable impedance;
a loop type probe being installed near the connecting portion, the loop type probe receiving a radio wave radiated from the antenna;
a power detector detecting electric power of a radio wave received by the loop type probe; and
a control circuit controlling an impedance of the matching circuit on the basis of power information output from the power detector.

7. The device according to claim 6,
wherein the loop type probe is arranged such that a separation distance from the connecting portion to the loop type probe is less than 1/4 of a wavelength corresponding to a maximum radio frequency used in the control device.

8. The device according to claim 6 or 7,
wherein an element length of the loop type probe is less than 1/2 of a wavelength corresponding to a maximum radio frequency used in the control device.

9. The device according to claim 6 or 7,
wherein a resonance frequency of the loop type probe is higher than a maximum radio frequency used in the control device.

10. The device according to any one of claims 6 to 9,
wherein a shape of the loop type probe is a spiral shape or a helical shape.

11. A radio communication device, comprising:
an antenna device including
an antenna including a power feeding point,
a matching circuit having variable impedance,
a loop type probe being installed near the power
feeding point, the loop type probe receiving a radio wave radiated from the antenna,
a power detector detecting electric power of the radio wave received by the loop type probe, and
a control circuit controlling an impedance of the matching circuit on the basis of power information output from the power detector;
a radio generating a signal; and
an amplifier amplifying the signal, the amplifier outputting an amplified signal to the antenna device.

12. The device according to Claim 11,
wherein the loop type probe is arranged such that a separation distance from the power feeding point to the loop type probe is less than 1/4 of a wavelength corresponding to a maximum radio frequency used in the antenna device.

13. The device according to claim 11 or 12,
wherein an element length of the loop type probe is less than 1/2 of a wavelength corresponding to a maximum radio frequency used in the antenna device.

14. The device according to claim 11 or 12,
wherein a resonance frequency of the loop type probe is higher than a maximum radio frequency used in the antenna device.

15. The device according to any one of claims 11 to 14,
wherein a shape of the loop type probe is a spiral shape or a helical shape.
